# EUROPÄISCHE PATENTANMELDUNG

(11) **EP 4 357 610 A1**
(43) Veröffentlichungstag der Anmeldung: **24.04.2024**
(21) Anmeldenummer: 22202512.4
(22) Anmeldetag: 19.10.2022
(51) Int. Cl.: F03D 7/04

(54) **VERFAHREN ZUM BETREIBEN EINER WINDENERGIEANLAGE**

(71) Anmelder: Wobben Properties GmbH, 26607 Aurich (DE)
(72) Erfinder: Alletto, Michael, 28217 Bremen (DE); Letzel, Marcus, 28832 Achim (DE)
(74) Vertreter: Eisenführ Speiser

(57) **Zusammenfassung**

Die Erfindung betrifft ein Verfahren zum Betreiben einer Windenergieanlage (100, 300, 400) zum Erzeugen einer einstellbaren Anlagenleistung, und die Windenergieanlage (100, 300, 400) weist einen Rotor (106) mit in ihrem Blattwinkel verstellbaren Rotorblättern (108) auf, ist mit einer einstellbaren Rotordrehzahl betreibbar, und ist an einem Aufstellungsort in einem Abstand zu einem Hindernis aufgestellt, wobei das Hindernis eine Windstörung verursachen kann, die in Abhängigkeit von aktueller Windrichtung (404) und Windgeschwindigkeit die Windenergieanlage (100, 300, 400) als Windnachlauf (406A) erreichen kann, die Windenergieanlage (100, 300, 400) zum Schutz gegen Belastungen durch den Windnachlauf (406A) ihren Anlagenbetrieb durch Abregeln reduziert, das Abregeln in Abhängigkeit von der aktuellen Windrichtung (404) und der aktuellen Windgeschwindigkeit gesteuert wird, eine Wettervorhersage verwendet wird, um zusätzlich zur Windrichtung (404) und Windgeschwindigkeit wenigstens eine weitere Wettereigenschaft zu berücksichtigen, und das Abregeln zusätzlich in Abhängigkeit von der Wettervorhersage, insbesondere von der weiteren Wettereigenschaft, gesteuert wird.

## Beschreibung

Die vorliegende Erfindung betrifft ein Verfahren zum Betreiben einer Windenergieanlage und sie betrifft eine entsprechende Windenergieanlage.

Windenergieanlagen sind bekannt, sie erzeugen mithilfe eines aerodynamischen Rotors elektrische Leistung aus Wind. Dabei ist die Windenergieanlage auch mechanischen Belastungen durch den Wind ausgesetzt. Auf solche mechanische Belastungen ist die Windenergieanlage entsprechend ausgelegt, es können aber erhöhte Belastungen durch Turbulenzen des Windes auftreten. Solche Turbulenzen können durch Hindernisse entstehen, die in Bezug auf die Windrichtung vor der Windenergieanlage stehen.

Solche Hindernisse können Gebäude und andere Windenergieanlagen sein, aber insbesondere auch durch die Topographie bedingt sein. So kommen als natürliche Hindernisse entsprechende Berge oder Anhöhen in Betracht, aber auch einzelne oder mehrere Bäume.

Da solche Turbulenzen von der Windrichtung abhängen, kann abhängig von der Windrichtung eine Belastungsreduzierung vorgesehen sein. Ein Vorgehen, die Windenergieanlage bei Windrichtungen, von denen eine starke Beanspruchung der Windenergieanlage zu erwarten ist, zu schützen, besteht darin, ein Sektormanagement anzuwenden, damit die Windenergieanlage, die verkürzt auch als Anlage bezeichnet werden kann, die garantierte Lebensdauer erreicht. Sektormanagement bedeutet hier, dass die Anlagen zur Lastenreduktion teilweise oder ganz abgeregelt werden, aber nur für einen entsprechend relevanten Windrichtungssektor.

Ein solches Abregeln geht mit einem Rückgang der Stromproduktion einher. Das Sektormanagement arbeitet so, dass für einen gegebenen Windrichtungssektor und eine gegebene Windgeschwindigkeit eine Abregelung der Anlage vorgesehen ist, die fest vorgegeben sein kann.

Entsprechend ergibt sich dennoch der Nachteil, dass zwar eine Anlage nur für die Windrichtungssektoren, oder nur für einen Windrichtungssektor, abgeregelt werden, dass dies dennoch eine erhebliche Ertragseinbuße haben kann.

Der vorliegenden Erfindung liegt somit die Aufgabe zugrunde, zumindest eines der zuvor genannten Probleme zu adressieren. Insbesondere soll eine Lösung vorgeschlagen werden, bei der die Windenergieanlage vor erhöhten Belastungen geschützt werden soll, bei möglichst wenig Ertragseinbußen. Insbesondere soll die Windenergieanlage dazu so wenig wie möglich abgeregelt werden. Zumindest soll zu bisher bekannten Lösungen eine Alternative vorgeschlagen werden.

Erfindungsgemäß wird ein Verfahren gemäß Anspruch 1 vorgeschlagen. Die Windenergieanlage wird somit betrieben, um eine einstellbare Anlagenleistung zu erzeugen. Es wird eine Windenergieanlage zugrunde gelegt, die einen Rotor mit Rotorblättern aufweist, wobei die Rotorblätter in ihrem Blattwinkel verstellbar sind. Außerdem ist die Windenergieanlage dadurch gekennzeichnet, dass sie mit einer einstellbaren Rotordrehzahl betreibbar ist. Außerdem ist die Windenergieanlage dadurch gekennzeichnet, dass sie an einem Aufstellungsort in einem Abstand zu einem Hindernis aufgestellt ist.

Das Hindernis kann im Grunde alles sein, was groß genug ist, um den Wind entsprechend zu beeinflussen. Neben topographischen Merkmalen wie einer Anhöhe oder einem Berg, einem Baum oder einem Wald, kommen auch Gebäude in Betracht und es kommen auch andere Windenergieanlagen in Betracht. Hierbei können diese anderen Windenergieanlagen, wobei natürlich auch nur eine einzelne in Betracht kommt, in demselben Windpark aufgestellt sein wie die zu betreibende Windenergieanlage. Die Aufstellung in einem gemeinsamen Windpark ist aber nicht erforderlich. Es kommt auch in Betracht, dass die zu betreibende Windenergieanlage und die Windenergieanlage, die ein Hindernis bildet, Einzelanlagen sind und/oder voneinander unabhängig in ein elektrisches Versorgungsnetz einspeisen.

Ein Hindernis ist nur ein solches, das eine Windstörung verursachen kann, die in Abhängigkeit von aktueller Windrichtung und Windgeschwindigkeit die Windenergieanlage als Windnachlauf erreichen kann. Ist ein vermeintliches Hindernis also weit genug weg oder klein genug, so dass es keine Windstörung verursachen kann, die die zu betreibende Windenergieanlage auch erreicht, ist es kein Hindernis im Sinne des Anspruchs 1 bzw. wird nicht betrachtet.

Es ist nun vorgesehen, dass die Windenergieanlage zum Schutz gegen Belastungen durch den Windnachlauf ihren Anlagenbetrieb durch Abregeln reduziert. Wenn also der Windnachlauf und damit die Windstörung die Windenergieanlage erreicht, kann sie ihren Anlagenbetrieb reduzieren, was als Abregeln bezeichnet wird, und ist dadurch weniger stark belastet und wird dadurch somit gegen Belastungen durch den Windnachlauf geschützt.

Das Abregeln erfolgt in Abhängigkeit von der aktuellen Windrichtung und der aktuellen Windgeschwindigkeit. Ein Abregeln erfolgt also nur, wenn der Nachlauf die Windenergieanlage aufgrund der aktuellen Windrichtung überhaupt erreichen kann und das Abregeln wird auch nur dann gesteuert, wenn die aktuelle Windgeschwindigkeit stark genug ist, dass der Nachlauf die Windenergieanlage erreicht und/oder die Turbulenzen überhaupt stark genug sind, dass ein Schutz der Windenergieanlage dagegen erforderlich ist.

Außerdem wird vorgeschlagen, eine Wettervorhersage zu verwenden. Diese wird verwendet, um zusätzlich zur Windrichtung und Windgeschwindigkeit wenigstens eine weitere Wettereigenschaft zu berücksichtigen. Da Windrichtung und Windgeschwindigkeit auch als Wettereigenschaft angesehen werden können, wird somit wenigstens eine dritte Wettereigenschaft berücksichtigt. Windrichtungen und Windgeschwindigkeiten müssen allerdings nicht notwendigerweise durch die Wettervorhersage berücksichtigt werden.

Dazu wird dann vorgeschlagen, dass das Abregeln zusätzlich in Abhängigkeit von der Wettervorhersage, insbesondere nämlich von der wenigstens einen weiteren Wettereigenschaft, gesteuert wird. Das Abregeln wird also in Abhängigkeit von der Windgeschwindigkeit, der Windrichtung und derwenigstens einen weiteren Wettereigenschaft gesteuert. Die wenigstens eine weitere Wettereigenschaft, die zum Beispiel eine thermische Luftschichtung sein kann, wird dabei von der Wettervorhersage geliefert.

Hier wurde besonders erkannt, dass die Länge der Zirkulationsgebiete hinter Bergen, Gebäuden und anderen Strömungshindernissen sowie die Länge der Nachläufe hinter Windenergieanlagen, die auch als Windkraftanlagen bezeichnet werden können, bedingt ist durch die thermische Schichtung der atmosphärischen Grenzschicht.

Bei stabiler Schichtung, die durch eine geringe Turbulenz und deswegen eine geringere Durchmischung charakterisiert wird, sind Nachläufe von Anlagen länger als bei labiler Schichtung. Das konkrete Verhalten kann aber auch von der konkreten Topographie abhängen.

Eine labile Schichtung ist durch eine starke Durchmischung gekennzeichnet.

Die Größe der Rezirkulationsgebiete hinter Bergen ist ebenso abhängig von der Schichtung. Bei stabiler Schichtung führt der Auftrieb dazu, dass ein starkes Ablösen der Strömung verhindert wird. In diesem Fall zeigt die Auftriebskraft in Richtung der Schwerkraft. Bei labiler Schichtung treten umgekehrte Effekte auf. Nachläufe hinter Anlagen und Rezirkulationsgebiete von Hindernissen gehen mit starken Scherschichten einher. Anlagen, die starken Scherschichten ausgesetzt sind, werden durch starke periodische Lasten beansprucht.

Daher wird vorgeschlagen, besonders solche thermische Schichtung zu berücksichtigen und diese wird durch die Wettervorhersage erhalten. Wenngleich die thermischen Schichtungen bei der vorgeschlagenen Betrachtung im Vordergrund stehen können, kommen aber auch andere Wettereigenschaften in Betracht, die die Stärke der Windstörungen an der Anlage und/oder die Länge der Nachläufe beeinflussen können. Somit kann es vorteilhaft sein, auch andere Wettereigenschaften zusätzlich oder alternativ zu den thermischen Schichten zu berücksichtigen.

Es wurde auch erkannt, dass solche weiteren Wettereigenschaften durch Wettervorhersagen gut oder besser erkannt werden können, als sie zu messen. Es wurde auch erkannt, dass eine gewisse Zeit vergehen kann, bis die an dem Hindernis entstandenen Windstörungen die Anlage erreichen. Insoweit wirkt die wenigstens eine weitere Wettereigenschaft nicht unbedingt unmittelbar sofort, so dass es vorteilhaft ist, sie über die Wettervorhersage frühzeitig zu berücksichtigen. Ebenfalls wurde erkannt, dass manche Wettereigenschaften, was besonders für die thermische Schichtung gilt, durch Wettervorhersagen gut abgebildet werden können. Besonders thermische Schichtungen sind zudem ein größer flächiges Phänomen und gehen in ihrer örtlichen Ausbreitung häufig über den Bereich zwischen Hindernis und Anlage hinaus. Das spricht ebenfalls dafür, sie über eine Wettervorhersage zu berücksichtigen. Für andere Wettereigenschaften kommt es ebenfalls in Betracht.

Als weiteres Beispiel einer Wettereigenschaft kann ein Frontendurchgang angesehen werden, also das Durchgehen einer Kaltfront, oder einer Warmfront. Solche Frontendurchgänge können mit einem Windgeschwindigkeitssprung und Windrichtungsänderungen einhergehen. Häufige, kurze Regenschauer können ein weiteres Beispiel einer Wettereigenschaft sein. Häufige, kurze Regenschauer können mit sehr starkem böigen Wind einhergehen. Beides kann die Nachläufe beeinflussen und es wird gemäß einer Ausführungsform vorgeschlagen, wenigstens eine dieser Phänomene jeweils als eine Wettereigenschaft zu berücksichtigen.

Besonders liegt der Erfindung die Erkenntnis zugrunde, dass für Anlagen schädliche Phänomene in ihrer räumlichen Ausdehnung von der Wetterlage abhängig sein können. Daher wird vorgeschlagen, Wetterprognosen in das Sektormanagement mit einzubeziehen. Besonders wird somit vorgeschlagen, nur zu Zeitpunkten, zu denen die Anlage schädlichen Strömungszuständen ausgesetzt ist, sie abzuregeln. Zu Zeitpunkten, zu denen solche schädlichen Erkenntnisse nicht auftreten, oder deren Auswirkung auf die Lebensdauer der Anlage gering ist, insbesondere vernachlässigbar ist, wird vorgeschlagen, mehr Leistung durch weniger restriktives Sektormanagement zu produzieren. Somit ist der erfindungsgemäße Vorschlag eine wetterbedingte Regelung.

Solche wetterbedingte Regelung ist als besonders wirksam erkannt worden, weil ein umgekehrt exponentieller Zusammenhang zwischen Amplitude der Belastungen und Anzahl der Lastzyklen bis zu einem Bauteilversagen besteht. Bei einer etwas geringeren Amplitude der Belastung können daher schon einige zusätzliche Lastzyklen möglich sein, bevor es zu einem Bauteilversagen kommt.

Gemäß einem Aspekt wird vorgeschlagen, dass die weitere Wettereigenschaft in Abhängigkeit der Wettervorhersage geschätzt wird und/oder die weitere Wettereigenschaft eine thermische Schichtung atmosphärischer Grenzschichten ist, und das Abregeln in Abhängigkeit von der thermischen Schichtung gesteuert wird.

Es wurde somit erkannt, dass die thermische Schichtung einen starken Einfluss auf die Ausbreitung und auch eine mögliche Veränderung der am Hindernis verursachten Windstörung und/oder des Nachlaufs haben kann. Daherwird vorgeschlagen, das Abregeln zusätzlich zu Windgeschwindigkeit und Windrichtung in Abhängigkeit von der thermischen Schichtung zu steuern.

Gemäß einem Aspekt wird vorgeschlagen, dass das Abregeln in Abhängigkeit von der thermischen Schichtung so gesteuert wird, dass ein die Windenergieanlage umgebender Bereich als flaches Land oder bergiges Land klassifiziert wird. Insbesondere wird der Bereich zwischen Windenergieanlage und Hindernis klassifiziert. Üblicherweise ändert sich aber ein flaches Land nicht auf einem sehr geringen Raum in ein bergiges Land oder umgekehrt. Daher kann der umgebende Bereich auch als Bereich mit einem Radius von mehreren Kilometern um die Windenergieanlage herum betrachtet werden, insbesondere mit einem Radius von wenigstens 5 km, insbesondere von wenigstens 10 km, um die Windenergieanlage herum. Als flaches Land kann ein so definierter Bereich klassifiziert werden, wenn eine maximale Höhendifferenz der Erdoberfläche in dem so definierten Bereich maximal 100 m, insbesondere maximal 50 m, beträgt.

Als bergiges Land kann der Bereich klassifiziert werden, wenn er nicht als flaches Land klassifiziert wurde.

Es wird dazu weiter vorgeschlagen, dass, wenn das Land als flaches Land klassifiziert wird, umso mehr abgeregelt wird, je schwächer eine Durchmischung zwischen Grenzschichten ist und/oder je stabiler die thermische Schichtung ist.

Umgekehrt wird vorgeschlagen, wenn das Land als bergiges Land klassifiziert wird, dass umso weniger abgeregelt wird, je schwächer eine Durchmischung zwischen Grenzschichten ist und/oder je stabiler die thermische Schichtung ist.

Bei einer schwachen Durchmischung zwischen Grenzschichten bzw. einer stabilen thermischen Schichtung liegen somit klare thermische Schichten vor. Besonders liegt eine untere Luftschicht vor, die kälter und damit schwerer ist, also eine höhere Dichte hat, als eine darüber liegende Luftschicht. Eine Windenergieanlage steht dann in der unteren, kälteren Luftschicht mit der höheren Dichte.

Dazu wurde erkannt, dass im flachen Gelände eine solche kalte Luftschicht die Ausbreitung eines Nachlaufs eher begünstigt, zumindest nicht stark behindert. Ein Nachlauf erreicht dann stärker die abzuregelnde Windenergieanlage, sodass dann bei flachem Gelände die Windenergieanlage stärker abzuregeln ist, als bei einer solchen Schichtung im bergigen Land.

Es wurde weiter erkannt, dass im bergigen Gelände die untere kalte Luftschicht durch Gewichtskraft bzw. Auftrieb stärker beeinflusst wird, weil im bergigen Land die Gewichtskraft bzw. der Auftrieb in Strömungsrichtung wirkt bzw. zu einer Strömung führt. Hier wird die schwere Luft zur leichteren Luft in Bewegung gesetzt, was bei einer starken Durchmischung nicht oder weniger passieren würde, denn durch das nicht ebene Gelände, also das nicht waagerechte Gelände, führt der Auftrieb der leichteren Luft bzw, der Abtrieb der schwereren Luft zu einer Luftströmung entlang des Geländebodens. Eine solche Luftströmung kann zur Dämpfung eines Nachlaufs führen, und/oder seine Entstehung verhindern oder schwächen. Daher ergibt sich im bergigen Land gegenüber flachem Land der gegenteilige Effekt und es wird vorgeschlagen, entsprechend weniger abzuregeln, wenn im bergigen Land die Durchmischung zwischen Grenzschichten schwächer ist und/oder die thermische Schichtung stabiler ist.

Gemäß einem Aspekt wird vorgeschlagen, dass zum Abregeln die Anlagenleistung reduziert wird, die Rotordrehzahl reduziert wird und/oder der Blattwinkel jedes Rotorblattes in Richtung hin zu einer Fahnenstellung verstellt wird.

Durch diese Maßnahmen kann die Belastung der Windenergieanlage reduziert werden, wenn die Belastungen durch den Windnachlauf reduziert werden müssen. Mit Reduzierung der Anlagenleistung wird insgesamt die Belastung der Windenergieanlage reduziert, auch die mechanische, besonders die auf den Rotor wirkende. Ähnlich verhält es sich bei der Rotordrehzahl, so dass eines von beiden zu reduzieren vorgeschlagen wird. Es kann aber auch beides zusammen reduziert werden.

Das Rotorblatt wird besonders bei Windgeschwindigkeiten im Bereich der Nennwindgeschwindigkeit belastet, da hier die Rotorblätter in einem Normalbetrieb einen Blattwinkel aufweisen, der die größte Angriffsfläche bietet. Durch Verdrehen des Blattwinkels in Richtung hin zur Fahnenstellung, also eine Erhöhung des Blattwinkels, kann diese Belastung reduzieren.

Vorzugsweise werden zwei oder alle drei Möglichkeiten kombiniert. Besonders kommt in Betracht, dass durch Verdrehen des Blattwinkels auch weniger Leistung aus dem Wind entnommen wird, so dass auch die Anlagenleistung, insbesondere die in das elektrische Versorgungsnetz eingespeiste Leistung, verringert wird.

Die Rotordrehzahl kann sich hierbei ebenfalls reduzieren. Vorteilhaft kann es sein, Anlagenleistung und Rotordrehzahl gemäß einer Drehzahl-Leistungs-Kennlinie einzustellen, die auch im Teillastbetrieb verwendet werden kann. Durch das Verstellen der Rotorblätter wird weniger Leistung aus dem Wind entnommen, so dass quasi aus Sicht der Windenergieanlage eine Teillastsituation eintritt, so dass die genannte Drehzahl-Leistungs-Kurve verwendet werden kann.

Gemäß einem Aspekt wird vorgeschlagen, dass in Abhängigkeit von der Wettervorhersage, insbesondere in Abhängigkeit von der Wettereigenschaft, eine Länge des Windnachlaufs geschätzt wird und in Abhängigkeit von der geschätzten Länge des Windnachlaufs das Abregeln gesteuert wird.

Hier liegt besonders die idealisierende Überlegung zugrunde, dass je nach Wettervorhersage und damit Wettereigenschaft der Windnachlauf, der ansonsten die Anlage gefährdet, so kurz ausfallen kann, dass er die Windenergieanlage nicht erreicht. In dem Fall braucht die Windenergieanlage nicht abgeregelt zu werden, was sie anderenfalls bei entsprechender Windrichtung und Windgeschwindigkeit machen müsste.

Hier und überhaupt zur Erfindung insgesamt wurde erkannt, dass ein solcher Windnachlauf nicht ohne Weiteres gemessen werden kann bzw. eine Messung einen teuren apparativen Aufwand erforderlich machen würde. Daher wird vorgeschlagen, diesen Windnachlauf einschließlich seiner Länge, zu schätzen. Dafür können umfangreiche Modelluntersuchungen im Vorfeld durchgeführt werden, die die Windenergieanlage nebst Hindernis, das die Windstörung und damit den Windnachlauf erzeugt, simuliert einschließlich der Wettervorhersage. Die Wettervorhersage bzw. ihr Ergebnis kann in entsprechenden Windmodellen Berücksichtigung finden. Dadurch kann in Voruntersuchungen ein solcher Nachlauf auch für variierende Bedingungen simuliert werden.

Aus dieser Erkenntnis und besonders dem Zusammenhang des simulierten Nachlaufs und der jeweils vorherrschenden Bedingungen kann im Betrieb aus den Bedingungen auf den zu erwartenden Nachlauf geschlossen werden. Verbesserungen einer solchen Schätzung durch tatsächliche Vorortmessungen kommen ergänzend in Betracht.

Zudem wurde erkannt, dass besonders die Länge des Windnachlaufs stark variieren kann, je nach Wettereigenschaft, und dabei ganz erheblich beeinflussen kann, inwieweit tatsächlich eine Belastung der Windenergieanlage vorliegt.

Gemäß einem Aspekt wird vorgeschlagen, dass die Wettervorhersage unter Verwendung eines regionalen Wettermodells an den Aufstellungsort angepasst wird, wobei das regionale Wettermodell einen Zusammenhang zwischen der Wettervorhersage, die für einen über den Aufstellungsort hinausgehenden Bereich aufgestellt wird, und einer lokalen Wettereigenschaft am Aufstellungsort beschreibt.

Das regionale Wettermodell ist also sehr konkret auf die Topographie und auch andere Randbedingungen wie vorherrschender Luftdruck angepasst. Das regionale Wettermodell kann einen Zusammenhang zwischen der Wettervorhersage und wenigstens einer lokalen Wettereigenschaft herstellen. Dazu kann das Wettermodell in Voruntersuchungen, die sowohl Simulationen als auch Vermessungen des Aufstellungsortes beinhalten können, erstellt werden. Das regionale Wettermodell liefert dadurch einen sehr konkreten und an den Aufstellungsort individualisierten Zusammenhang. Dadurch können Phänomene vor Ort und insbesondere zu erwartende weitere Wettereigenschaften, die den Windnachlauf beeinflussen, bestimmt, insbesondere vorhergesagt werden. Dadurch ist eine gute Grundlage für die Bewertung der zu erwartenden Belastung an der Windenergieanlage verfügbar.

Gemäß einem Aspekt wird vorgeschlagen, dass Strömungszustände an der Windenergieanlage, die durch den Windnachlauf beeinflusst werden, in Abhängigkeit von der Wettervorhersage, insbesondere in Abhängigkeit von der Wettereigenschaft geschätzt werden, und in Abhängigkeit von den geschätzten Strömungszuständen das Abregeln gesteuert wird.

Hierbei werden, ausgehend von der Wettervorhersage, und den dabei geschätzten Wettereigenschaften, und natürlich auch basierend auf Windgeschwindigkeit und Windrichtung, die Strömungszustände an der Windenergieanlage konkret geschätzt. Auch dafür kann das regionale Wettermodell herangezogen werden. Es ist hierfür nicht erforderlich, unbedingt ausdrücklich eine Aussage über die Länge des Windnachlaufs zu machen, sondern es kann hier direkt die Strömungssituation an der Windenergieanlage geschätzt werden und daraus die Belastung an der Windenergieanlage abgeleitet werden. Dadurch ist ein gezieltes Abregeln und insbesondere ein gezieltes Unterlassen des Abregelns, zumindest das abgeschwächte Abregeln, ableitbar.

Gemäß einem Aspekt wird vorgeschlagen, dass Strömungszustände, die in Abhängigkeit von der Wettervorhersage geschätzt werden, zusätzlich in Abhängigkeit von wenigstens einem lokalen Wettermodell geschätzt werden, gegebenenfalls unter weiterer Berücksichtigung eines bzw. des regionalen Wettermodells, wobei das lokale Wettermodell einen Zusammenhang zwischen der Wettervorhersage und an der Windenergieanlage erwarteten Strömungszuständen beschreibt.

Insoweit werden insbesondere drei Wettermodelle berücksichtigt bzw. zumindest unterschieden. Der Wettervorhersage, die auch als übergreifende oder globale Wettervorhersage bezeichnet werden kann, liegt ein Wettermodell zugrunde. Dieses muss nicht unbedingt ausdrücklich bei der hier vorgeschlagenen Steuerung der Windenergieanlage berücksichtigt und/oder überhaupt gekannt werden. Hier kann es ausreichend sein, die Ergebnisse, nämlich die Wettervorhersage, aufzunehmen und zu berücksichtigen.

Das regionale Wettermodell ist fokussiert auf den regionalen Bereich vor Ort und kann besonders, unter Zuhilfenahme der Wettervorhersage, also der globalen Wettervorhersage, atmosphärische Zustände vor Ort beurteilen. Das regionale Wettermodell verbessert dabei eine globale Wettervorhersage für den konkreten Ort und kann dadurch die atmosphärischen Zustände vor Ort besser vorhersagen. Solche atmosphärischen Zustände vor Ort können also dadurch geschätzt und damit bestimmt werden. Die genannte thermische Schichtung vor Ort ist eine solche Wettereigenschaft, die mit Hilfe des regionalen Wettermodells geschätzt werden kann.

Das lokale Wettermodell ist wiederum ein Modell für die konkrete Situation vor Ort. Es kann konkret Strömungszustände in bestimmten Bereichen berechnen helfen, besonders ausgehend von der globalen Wettervorhersage und dem regionalen Wettermodell.

Besonders das lokale Wettermodell kann auch das Ergebnis umfangreicher Simulationen für die Situation vor Ort sein. Besonders kann ein solches lokales Wettermodell auf einen konkreten Windpark angepasst sein. Ein solcher Windpark, in dem die zu steuernde Windenergieanlage steht, kann hinsichtlich Topographie und den aufgestellten Windenergieanlagen und auch den relevanten Hindernissen vermessen werden und darauf basierend kann das lokale Wettermodell erstellt werden. Zusätzlich können konkrete Messungen vor Ort in das lokale Wettermodell einfließen, gegebenenfalls erst später zum Verfeinern des lokalen Wettermodells. Hierzu können besonders Messungen an den Windenergieanlagen vor Ort hinsichtlich Temperatur, Windgeschwindigkeit, Windrichtung und Luftdruck aufgenommen. Diese Messungen können in einen Zusammenhang zu einer Wettervorhersage gesetzt werden und/oder damit können Ergebnisse aus dem regionalen Wettermodell hergestellt werden.

Hier ist besonders zu beachten, dass die Vermessung des Aufstellungsortes für den Windpark oftmals vorm Errichten des Windparks erfolgt. Spätere Messungen mit den Windenergieanlagen können deren Einfluss mitberücksichtigen. Davon abgesehen, können aber auch Messungen durch einen Messmast einfließen. Das kann vor und/oder nach Errichtung des Windparks erfolgen.

Darauf basierend, also insbesondere auf der Wettervorhersage, gegebenenfalls dem regionalen Wettermodell und dem lokalen Wettermodell ist es somit möglich, konkrete Strömungszustände an der Windenergieanlage zu bestimmen. Der Einfluss des jeweils relevanten Hindernisses wird dabei natürlich in besonderem Maße berücksichtigt.

Gemäß einem Aspekt wird vorgeschlagen, dass das lokale Wettermodell im laufenden Betrieb der Windenergieanlage angelernt oder adaptiert wird, insbesondere durch laufenden Vergleich der Wettervorhersage mit an der Windenergieanlage erfassten Strömungszuständen. Außerdem oder alternativ wird vorgeschlagen, dass das lokale Wettermodell in Abhängigkeit von historischen Daten angelernt und/oder adaptiert wird. Außerdem oder alternativ wird vorgeschlagen, dass das lokale Wettermodell durch Simulationen bestimmt wird.

Die Bedeutung des lokalen Wettermodells wurde oben schon beschrieben. Hier wurde besonders erkannt, dass das Wettermodell adaptiert werden kann, um die Zusammenhänge noch besser zu erfassen. Dabei liegt zum einen der Gedanke zugrunde, dass durch eine höhere Anzahl von ausgewerteten Situationen und damit Wetterzusammenhängen das Modell verbessert werden kann. Außerdem kommt auch in Betracht, dass sich die Situationen vor Ort verändern. Zum einen kommt dafür eine generelle Klimaveränderung in Betracht, die auch dort spürbar sein kann. Zum anderen kommt auch in Betracht, dass sich die Topographie ändert, zum Beispiel dadurch, dass sich die Vegetation ändert.

Die Adaption wird besonders dadurch vorgeschlagen, dass laufend ein Vergleich zwischen der Wettervorhersage mit an der Windenergieanlage erfassten Strömungszuständen durchgeführt wird. Es werden also laufend diese Zusammenhänge erfasst und da diese im lokalen Wettermodell abgebildet werden können, zumindest teilweise, kann das lokale Wettermodell entsprechend adaptiert werden.

Ein Anlernen kommt auch in Abhängigkeit von historischen Daten in Betracht, also Messdaten, die früher, z.B. beim Vermessen des Windparks, aufgenommen wurden. Dadurch kann das lokale Wettermodell erstellt, also angelernt werden, oder adaptiert werden, wenn es bereits existiert.

Ebenfalls kann das lokale Wettermodell durch Simulationen bestimmt werden, wie oben erläutert wurde. Die drei genannten Teilaspekte können auch kombiniert werden. Insbesondere kommt in Betracht, das lokale Wettermodell zunächst durch eine Simulation zu bestimmen und dann später durch laufende Messungen zu adaptieren.

Gemäß einem Aspekt wird vorgeschlagen, dass die Schätzung von Strömungszuständen an der Windenergieanlage, die durch den Windnachlauf beeinflusst werden, durch aktuelle Messungen an oder in der Nähe der Windenergieanlage verbessert wird. Solche aktuellen Messungen können leicht durchgeführt werden, besonders durch existierende Sensoren an der Windenergieanlage oder einem eventuell existierendem Messmast, oder an anderen Windenergieanlagen. Werden durch solche Messungen Strömungszustände zumindest teilweise erfasst, können Sie mit den Strömungszuständen, die geschätzt wurden, verglichen werden. Entsprechend kann dann eine Verbesserung durchgeführt werden und gegebenenfalls auch das Abregeln angepasst werden.

Hier ist zu beachten, dass eine solche Messung an der Windenergieanlage die Schätzung nicht ersetzen kann, es wird aber vorgeschlagen, die Schätzung dennoch durchzuführen. Besonders wird die Schätzung dafür benötigt, rechtzeitig das Abregeln durchzuführen, also die Windenergieanlage gegebenenfalls abzuregeln, oder auch nicht abzuregeln, bevor etwaige schädigende Situationen auftreten oder nicht auftreten.

Gemäß einem weiteren Aspekt wird vorgeschlagen, dann, wenn die Windenergieanlage in einem Windpark aufgestellt ist, Nachläufe innerhalb des Windparks zu berücksichtigen. Hier kommt besonders in Betracht, dass ein solcher Nachlauf der genannte Windnachlauf sein kann, dass also eine Windenergieanlage das Hindernis darstellt. Hier ist besonders zu berücksichtigen, dass der Nachlauf oder Windnachlauf einer Windenergieanlage auch vom Betrieb dieser Windenergieanlage abhängt, besonders von ihrer Drehzahl, ihrer Ausrichtung und auch der Blattwinkelstellung. Werden diese Größen berücksichtigt, können Nachläufe von Windenergieanlagen in einem Windpark gezielter und genauer erkannt werden.

Ein Vorschlag ist, für eine energetische Betrachtung, das Hindernis, also die den Nachlauf erzeugende Windenergieanlage, zu beeinflussen. Hier kann geprüft werden, ob das Beeinflussen der den Nachlauf erzeugenden Windenergieanlage für das Gesamtkonzept des Windparks eventuell besser ist, als die Windenergieanlage im Nachlauf anzupassen.

Gemäß einem Aspekt wird vorgeschlagen, dass das Abregeln der Höhe nach kontinuierlich oder in mehreren Schritten in Abhängigkeit von der Wettervorhersage gesteuert wird. Hier wurde besonders erkannt, dass das Abregeln auch der Höhe nach gesteuert werden kann, also nicht nur in Betracht kommt, das Abregeln vollständig durchzuführen oder vollständig auszusetzen. Wenn die Wettervorhersage und die daraus erhaltene Wettereigenschaft zu einer geringeren Belastungsannahme führen, als ohne Berücksichtigung der weiteren Wettereigenschaft angenommen worden würde, so kann vorgesehen sein, das Abregeln nur mit geringerer Höhe, also mit geringerer Stärke durchzuführen. Es wird also nicht so stark abgeregelt. Dadurch kann eine Belastungsreduzierung erreicht werden, die aber nur zu einer geringen Energieeinbuße führt.

Dieses Abregeln der Höhe nach kann kontinuierlich oder in mehreren Schritten erfolgen. Besonders beim kontinuierlichen Abregeln kann ein funktionaler Zusammenhang zwischen der weiteren Wettereigenschaft und dem Abregeln vorgesehen sein. Dazu kann beispielsweise die Wettereigenschaft durch eine kontinuierliche Bewertungsfunktion bewertet werden, die wiederum zu dem kontinuierlichen Abregeln der Höhe nach herangezogen werden kann.

Beim Abregeln der Höhe nach in mehreren Schritten sind insbesondere drei, vier, fünf oder wenigstens sechs Schritte vorgesehen. Für solche Schritte kann die Wettereigenschaft ebenfalls in gleich vielen Schritten bewertet werden. Es kann aber auch eine kontinuierliche Bewertung der Wettereigenschaft verwendet werden und trotzdem das Abregeln der Höhe nach in Schritten erfolgen. In jedem Fall kann zusätzlich die Windrichtung und Windgeschwindigkeit berücksichtigt werden. Beispielsweise kann je nach Windrichtung oder Windgeschwindigkeit ein stärkeres oder schwächeres Abregeln notwendig werden.

Gemäß einem Aspekt bildet eine weitere Windenergieanlage das Hindernis und/oder die zu steuernde Windenergieanlage ist eine von mehreren Windenergieanlagen eines Windparks, wobei eine der übrigen Windenergieanlagen, je nach Windrichtung, das Hindernis bildet. Eine der übrigen Windenergieanlagen kann somit in demselben Windpark oder in einem fremden Windpark stehen, oder eine Einzelanlage bilden.

Hier wurde besonders erkannt, dass solche Windstörungen von solchen benachbarten Windenergieanlagen ausgehen können, und auch solche durch eine benachbarte Windenergieanlage verursachte Störung und resultierender Windnachlauf von der wenigstens einen weiteren Wetterbedingung abhängen können. Somit wird vorgeschlagen, auch dann, wenn eine weitere bzw. eine der übrigen Windenergieanlagen das Hindernis bildet, das Abregeln zusätzlich in Abhängigkeit von der Wettervorhersage, insbesondere von der weiteren Wettereigenschaft zu steuern. Hierdurch können auch Besonderheiten einer durch eine Windenergieanlage erzeugten Windstörung berücksichtigt werden. Das Abregeln kann entsprechend gesteuert bzw. angepasst werden.

Erfindungsgemäß wird auch ein Verfahren zum Planen eines mehrere Windenergieanlagen aufweisenden Windparks vorgeschlagen. Ein solches Verfahren zum Planen sieht vor, dass
- zur Schätzung einer zu erwartenden Energieproduktion des Windparks ein Betrieb der Windenergieanlagen für einen Schätzzeitraum, insbesondere ein Jahr, simuliert wird, wobei zur Simulation jeweils ein
- Verfahren zum Betreiben einer Windenergieanlage zum Erzeugen einer einstellbaren Anlagenleistung simuliert wird, wobei bei dem simulierten Verfahren die Windenergieanlage
- einen Rotor mit in ihrem Blattwinkel verstellbaren Rotorblättern aufweist,
- mit einer einstellbaren Rotordrehzahl betreibbar ist, und
- an einem Aufstellungsort in einem Abstand zu einem Hindernis aufgestellt ist
wobei die Simulation beinhaltet, dass
- das Hindernis eine Windstörung verursachen kann, die in Abhängigkeit von aktueller Windrichtung und Windgeschwindigkeit die Windenergieanlage als Windnachlauf erreichen kann,
- die Windenergieanlage zum Schutz gegen Belastungen durch den Windnachlauf ihren Anlagenbetrieb durch Abregeln reduziert,
- das Abregeln in Abhängigkeit von der aktuellen Windrichtung und der Windgeschwindigkeit gesteuert wird,
- eine Wettervorhersage verwendet wird, um zusätzlich zur Windrichtung und Windgeschwindigkeit wenigstens eine weitere Wettereigenschaft zu berücksichtigen, und
- das Abregeln zusätzlich in Abhängigkeit von der Wettervorhersage, insbesondere von der weiteren Wettereigenschaft, gesteuert wird, wobei als Wettervorhersage historische Wetterdaten des Aufstellungsortes verwendet werden.

Zur Planung des Windparks wird somit insbesondere ein Betrieb der Windenergieanlagen, also ein Betrieb des Windparks für einen Schätzraum, insbesondere für ein Jahr simuliert. Diese Simulation verwendet übliche Windsituationen, wie sie jeweils über das Jahr verteilt an dem geplanten Aufstellungsort auftreten, oder zumindest üblicherweise auftreten. Darauf aufbauend wird der Betrieb des Windparks und damit der Betrieb jeder Windenergieanlage einzeln durchsimuliert. Es wird also simuliert, wie sich die einzelne Windenergieanlage und damit der Windpark verhalten würde, woraus schließlich eine Leistungserzeugung resultiert. Dies wird im Grunde für einen Schätzzeitraum, insbesondere für ein vollständiges Jahr, durchsimuliert. Das bedeutet nicht, dass die Simulation ein vollständiges Jahr dauern muss, aber - vereinfacht ausgedrückt - sollten zumindest alle Jahreszeiten durchsimuliert werden.

Ein Verhalten einer solchen Windenergieanlage in einem solchen Windpark, und damit das Verhalten des Windparks insgesamt, beinhaltet die Berücksichtigung von Windstörungen durch Hindernisse. Führt das zum Abregeln einer Windenergieanlage, macht sich dies letztlich auch in der Leistungs- und damit Energieproduktion des Windparks bemerkbar. Solche Verhalten werden also auch berücksichtigt. Hier wird vorgeschlagen, zudem ein solches Verhalten zu berücksichtigen, dass nicht ausschließlich abhängig von Windrichtung und Windgeschwindigkeit zu einem bestimmten Hindernis ein Abregeln durchführt. Stattdessen wird hier im Grunde ein Verhalten gemäß wenigstens einem vorstehend erläuterten Aspekt des Verfahrens zum Steuern der Windenergieanlage berücksichtigt, bzw. simuliert.

Es wird also berücksichtigt, dass gegebenenfalls eine Windenergieanlage doch nicht oder nicht zu stark abgeregelt werden würde. Das hat Auswirkungen auf die Leistungs- und damit Energieproduktion und damit ergibt sich insgesamt eine geänderte angenommene Energieerzeugung des Windparks, was auch als AEP (Annual Energy Production) bezeichnet werden kann.

Das Planungsverfahren berücksichtigt also, dass in dem zu planenden Park ein verbessertes Steuerverfahren eingesetzt wird. Hier ist besonders zu berücksichtigen, dass die Simulationen entsprechend ertüchtigt werden müssen, diese verbesserte Steuerung zu berücksichtigen, denn ihr liegt die Berücksichtigung der weiteren Wetterbedingung oder Wetterbedingungen aus einer Wettervorhersage zugrunde. Diese Informationen müssen also auch bei der Planung bzw. bei der entsprechenden Simulation zusätzlich aufgenommen und berücksichtigt werden.

Gemäß einem Aspekt wird vorgeschlagen, dass zur Simulation jeweils eines Betriebs einer Windenergieanlage ein Verfahren zum Betreiben einer Windenergieanlage gemäß einem der vorstehend erläuterten Aspekte des Verfahrens zum Betreiben simuliert wird.

Insbesondere ist vorgesehen, für die Wettervorhersage, die das Verfahren zum Betreiben verwendet, historische Wetterdaten zu verwenden. Weiterhin wird vorgeschlagen, das lokale Wettermodell in Abhängigkeit von historischen Daten anzulernen oder zu adaptieren und/oder dass das lokale Wettermodell durch Simulationen bestimmt wird. Hierdurch ist es möglich, auch schon für den noch zu planenden, also noch nicht existierenden, Windpark ein lokales Wettermodell zu erstellen und zumindest bei der Berechnung der jährlichen Energieproduktion zu berücksichtigen.

Außerdem oder alternativ wird vorgeschlagen, bei der Schätzung von Strömungszuständen an der Windenergieanlage, die durch den Windnachlauf beeinflusst werden, anstelle von für Verbesserungen verwendeter aktueller Messungen an oder in der Nähe der Windenergieanlage historische Messwerte zu verwenden. Dadurch kann bei der Planung des Windparks sogar das Verhalten der verbesserten Abregelung im Lichte solcher Verbesserungen berücksichtigt werden, die im späteren Betrieb durch aktuelle Messungen an oder in der Nähe der Windenergieanlage erreicht werden würde. Bei der Windparkplanung sind solche Messungen nicht möglich, da die Windenergieanlage noch nicht errichtet ist. Aus historischen Messwerten, also insbesondere solche, die bei der Vermessung des Aufstellungsortes aufgenommen wurden, können aber Werte entsprechend solcher Messungen durch Simulation bestimmt werden. Dadurch kann das Verhalten des Verfahrens zum Betreiben einer Windenergieanlage selbst für diese besondere Verbesserung durch aktuelle Messungen für die Windparkplanung berücksichtigt werden.

Erfindungsgemäß wird auch eine Windenergieanlage vorgeschlagen, die zum Erzeugen einer einstellbaren Anlagenleistung vorgesehen ist. Die Windenergieanlage
- weist einen Rotor mit in ihrem Blattwinkel verstellbaren Rotorblättern auf,
- ist mit einer einstellbaren Rotordrehzahl betreibbar, und
- ist an einem Aufstellungsort in einem Abstand zu einem Hindernis aufgestellt
wobei
- das Hindernis eine Windstörung verursachen kann, die in Abhängigkeit von aktueller Windrichtung und Windgeschwindigkeit die Windenergieanlage als Windnachlauf erreichen kann,
wobei die Windenergieanlage dazu vorbereitet ist, mit einem Verfahren betrieben zu werden, das
- die Windenergieanlage zum Schutz gegen Belastungen durch den Windnachlauf in ihrem Anlagenbetrieb durch Abregeln reduziert, wobei
- das Abregeln in Abhängigkeit von der aktuellen Windrichtung und der aktuellen Windgeschwindigkeit gesteuert wird,
- eine Wettervorhersage verwendet wird, um zusätzlich zur Windrichtung und Windgeschwindigkeit wenigstens eine weitere Wettereigenschaft zu berücksichtigen, und
- das Abregeln zusätzlich in Abhängigkeit von der Wettervorhersage, insbesondere von der weiteren Wettereigenschaft, gesteuert wird, wobei
- das Steuern des Abregelns auf einer Abregelungssteuereinheit implementiert ist und die Windenergieanlage diese Abregelungssteuereinheit aufweist, oder mit ihr gekoppelt ist bzw. eine Schnittstelle zum Koppeln mit der Abregelungssteuereinheit aufweist.

Eine solche Windenergieanlage wird somit mit einem Verfahren betrieben, das ein Abregeln durchführt, wie es gemäß wenigstens einer vorstehend beschriebenen Ausführungsform erläutert wurde. Das Verfahren ist dazu auf einer Abregelungssteuereinheit implementiert. Eine solche Abregelungssteuereinheit kann ein Prozessrechner sein, einzelne Verfahrensteile können auch auf mehreren Teilen einer Steuereinheit verteilt implementiert sein. Die Abregelungssteuereinheit kann auch Teil einer Anlagensteuerung der Windenergieanlage sein, oder eine Anlagensteuerung kann die Abregelungssteuereinheit bilden, insbesondere wenn das Verfahren auf der Anlagensteuerung implementiert ist.

Besonders kann das Verfahren zum Steuern des Abregelns als Ablaufprogramm vorgesehen und auf der Abregelungssteuereinheit bzw. einem dort vorhandenen Prozessrechner implementiert sein.

Die Abregelungssteuereinheit kann Teil der Windenergieanlage sein, es kann aber auch vorgesehen sein, diese separat vorzusehen, insbesondere in einem zentralen Parkrechner, wenn die Windenergieanlage in einem Windpark aufgestellt ist. In dem Fall ist die Windenergieanlage mit der Abregelungssteuereinheit gekoppelt, insbesondere über eine entsprechende Schnittstelle. Eine solche Schnittstelle kann Signale empfangen und senden, die für das Verfahren benötigt werden und oben gemäß wenigstens einer Ausführungsform beschrieben wurden.

Erfindungsgemäß wird auch eine solche Abregelungssteuereinheit vorgeschlagen. Diese ist vorbereitet zum Steuern des Abregelns einer Windenergieanlage und kann dazu mit der abzuregelnden Windenergieanlage entsprechend gekoppelt sein. Sie arbeitet gemäß einem Verfahren gemäß einem der vorstehend beschriebenen Ausführungsformen, wobei ein solches Verfahren in der Abregelungssteuereinheit in einem Prozessrechner implementiert sein kann, insbesondere als Computerprogramm.

Die Vorzüge einer solchen Abregelungssteuereinheit ergeben sich aus den vorstehenden Erläuterungen. Insbesondere kann das Abregeln einer Windenergieanlage damit gesteuert werden, wobei das Verfahren auf der Abregelungssteuereinheit dafür auf einfache Art und Weise bereitgestellt werden kann. Es ergibt sich auch eine einfache Möglichkeit, das Verfahren für beliebige Windenergieanlagen zu verwenden. Dazu können einheitliche Abregelungssteuereinheiten bereitgestellt werden, die dann lediglich an die jeweiligen Besonderheiten der zu steuernden Windenergieanlage anzupassen sind, insbesondere ist das jeweils individuelle Hindernis nach seinem Ort und seiner Beschaffenheit zu berücksichtigen.

Erfindungsgemäß wird auch ein Windpark mit mehreren Windenergieanlagen vorgeschlagen. Ein solcher Windpark weist gemäß einem Aspekt wenigstens eine erfindungsgemäß zu steuernde Windenergieanlage auf, die vorstehend erfindungsgemäß beschrieben wurde, insbesondere eine, auf der ein Verfahren zum Betreiben einer Windenergieanlage gemäß einem der vorstehend beschriebenen Ausführungsformen implementiert ist oder angewendet wird.

Außerdem oder alternativ weist der Windpark eine Parksteuerung auf, die eine vorstehend beschriebene Abregelungssteuereinheit umfasst. Dadurch kann das Steuern des Abregelns zentral über die Parksteuerung erfolgen. Die Parksteuerung kann die Abregelungssteuereinheit auch dadurch umfassen, dass die Funktonalität in einem Prozessrechner der Parksteuerung implementiert ist.

Gemäß einem Aspekt wird vorgeschlagen, dass der Windpark Kommunikationsmittel aufweist zur Kommunikation unter den Windenergieanlagen, um das Abregeln einer ersten Windenergieanlage in Abhängigkeit von einer zweiten Windenergieanlage zu steuern, insbesondere wenn die zweite Windenergieanlage das Hindernis für die erste Windenergieanlage bildet. Eine solche Kommunikation kann zentral über den Parkrechner des Windparks erfolgen. Insbesondere können dabei auch Messdaten über Strömungszustände an der jeweiligen Windenergieanlage übertragen werden. Dadurch ist es auch möglich, was hier als eigener Aspekt vorgeschlagen wird, die zu steuernde und somit ggf. abzuregelnde Windenergieanlage in Abhängigkeit von dem Betrieb der Windenergieanlage zu steuern und damit davon abhängig abzuregeln, die das Hindernis bildet.

Nachfolgend wird die Erfindung exemplarisch anhand von Ausführungsformen unter Bezugnahme auf die begleitenden Figuren näher erläutert.
- **Figur 1**: zeigt eine Windenergieanlage in einer perspektivischen Ansicht.
- **Figur 2**: zeigt einen Windpark in einer schematischen Darstellung.
- **Figur 3**: zeigt schematisch eine Hindernissituation für zwei Windrichtungen in einer Draufsicht.
- **Figur 4**: veranschaulicht schematisch die Auswirkung einer thermischen Luftschichtung auf eine Hindernissituation für zwei Beispiele.
- **Figur 5**: zeigt ein schematisches Ablaufdiagramm zur Umsetzung eines vorgeschlagenen Verfahrens.

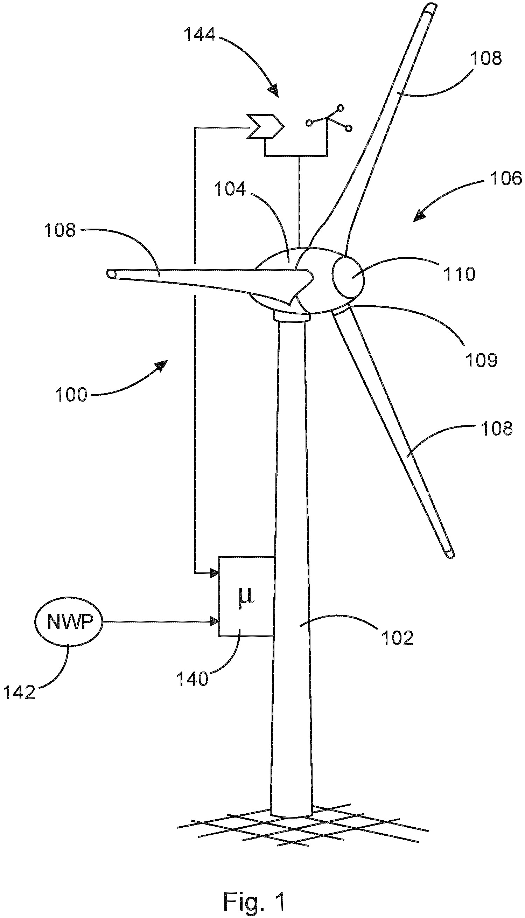

**Figur 1** zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.]

In Figur 1 ist zudem schematisch eine Anlagensteuerung 140 dargestellt, die nur aus zeichnerischen Gründen außerhalb des Turms 102 gezeigt ist. Die Anlagensteuerung 140 kann in dem Turm 102 und/oder in der Gondel 104 angeordnet sein. Es kommt auch in Betracht, dass eine Aufteilung vorgesehen ist, so dass sich ein Teil der Anlagensteuerung im Turm 102 und ein anderer Teil in der Gondel befindet.

In der Anlagensteuerung 140 kann das Verfahren zum Betreiben der Windenergieanlage und insbesondere zum Abregeln des Betriebs der Windenergieanlage implementiert sein. Die Anlagensteuerung kann dazu eine Wettervorhersage von einem externen Wettermodell 142 erhalten. Das ist in Figur 1 schematisch angedeutet und solche Wetterdaten der Wettervorhersage können per Funk und/oder durch ein SCADA an die Anlagensteuerung übertragen werden.

Die Anlagensteuerung erhält außerdem Sensordaten von Sensoren 144, für die hier exemplarisch und veranschaulichend ein Anemometer mit Windfahne dargestellt ist. Insoweit verwendet die Anlagensteuerung zum Abregeln tatsächlich Informationen zu Windgeschwindigkeit und Windrichtung. Diese Informationen können aber auch anderweitig ermittelt werden. Für die Windrichtung kommt insbesondere in Betracht, dass diese der Anlagensteuerung ohnehin vorliegt und/oder anstelle der Windrichtung die aktuelle Azimutausrichtung der Windenergieanlage verwendet wird. Die aktuelle Azimutausrichtung der Windenergieanlage kann wiederum von der erfassten Windrichtung durch die Windfahne abhängen.

Die aktuelle Windgeschwindigkeit kann als Messwert von dem Anemometer oder einem anderen Sensor, für den das Anemometer repräsentativ auch steht, verwendet werden, oder sie kann aus Anlagendaten wie Drehzahl, Leistung und Blattwinkel geschätzt werden.

Ergänzend wird vorgeschlagen, konkrete Strömungsverhältnisse an der Windenergieanlage 100 zu erfassen, die auch ausreichend Informationen zum Erfassen von Verwirbelungen geben. Dafür können weitere Sensoren vorgesehen sein, für die die Sensoren 144 ebenfalls repräsentativ stehen sollen.

In der Anlagensteuerung können auch regionale und/oder lokale Wettermodelle implementiert sein, die die Daten des Wettermodells 142 verbessern können. Das regionale Wettermodell kann besonders dafür vorgesehen sein, die Daten des Wettermodells 142 höher aufzulösen. Das lokale Wettermodell kann besonders dazu vorgesehen sein, eine konkrete Situation an der Windenergieanlage 100 abzubilden.

In der Anlagensteuerung 140 kann zudem die Information über das Hindernis enthalten sein. Besonders bei festen Hindernissen kann eine entsprechende Information als einmalige Information bereits beim Errichten der Windenergieanlage abgespeichert sein. Es kommt aber auch in Betracht, dass solche Informationen regelmäßig neu übertragen werden.

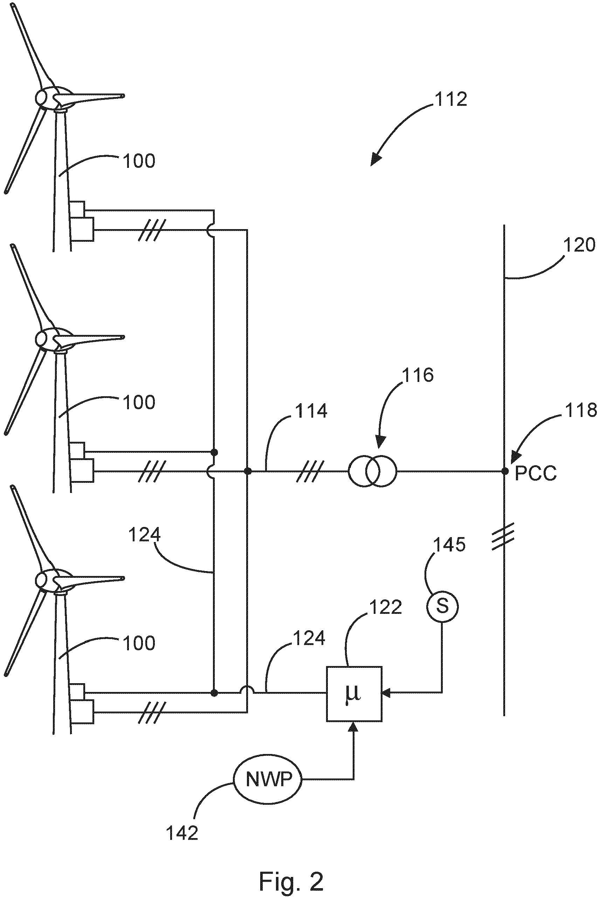

**Figur 2** zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf, der synonym auch als zentrale Parksteuerung bezeichnet werden kann. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

Gemäß einer Variante kann das Abregeln einer der Windenergieanlagen 100 auf dem zentralen Parkrechner 122 implementiert sein. Hier kann auch eine Abregelung für mehrere der Windenergieanlagen implementiert sein, wobei jeweils für jede Windenergieanlage eine individuelle Abregelung durchgeführt wird und insoweit zumindest teilweise jeweils ein individuelles Verfahren implementiert ist. Die Verfahren können aber Gemeinsamkeiten berücksichtigen, insbesondere kann die Ermittlung der wenigstens einen weiteren Wettereigenschaft für alle Windenergieanlagen gleich sein, da eine solche weitere Wettereigenschaft, je nach Parkgröße, den ganzen Windpark gleich betrifft.

Insoweit kann der Parkrechner 122 eine Abregelungssteuereinheit umfassen. Die Abregelungssteuereinheit kann eine eigene physikalische Einheit bilden, oder als Programmcode auf dem Parkrechner implementiert sein. Der Parkrechner bzw. die Abregelungssteuereinheit weist dazu auch Schnittstellen auf, um Wetterdaten eines Wettermodells 142 empfangen zu können.

Der zentrale Parkrechner 122, der auch vereinfachend und synonym als Parkrechner bezeichnet werden kann, erhält zudem Sensordaten von einer Sensoranordnung 145. Die Sensoranordnung 145 kann ein Messmast im Windpark sein. Es kommt aber auch in Betracht, dass Sensordaten von den Windenergieanlagen erhalten werden. Sensordaten von den Windenergieanlagen, und auch andere Daten von den Windenergieanlagen, kann der Parkrechner 122 über die Datenleitungen 124 empfangen. Über die Datenleitungen 124 kann der Parkrechner auch die Windenergieanlagen steuern.

Der Parkrechner 122 kann eine Parksteuerung enthalten oder der Parkrechner 122 kann auch als Parksteuerung bezeichnet werden.

Wenn das Abregeln durch den Parkrechner 122 gesteuert wird, ermittelt dieser die wenigstens eine weitere Wettereigenschaft. Das erfolgt ggf. für jede betroffene Windenergieanlage individuell, nämlich jeweils über die Kenntnis eines relevanten Hindernisses. Es wird also auch hier eine Wettervorhersage verwendet, um zusätzlich zur Windrichtung und Windgeschwindigkeit wenigstens eine weitere Wettereigenschaft zu berücksichtigen. Das ist insoweit generell so zu verstehen, dass die Wettervorhersage die weitere Wettereigenschaft als Information bereitstellt, oder diese weitere Wettereigenschaft aus den Informationen abgeleitet wird, die die Wettervorhersage bereitstellt. Daraus leitet der Parkrechner 122 eine vorgesehene Abregelung ab und kann diese als Abregelungssignal über die Datenleitungen 124 jeweils an die betreffenden Windenergieanlagen übertragen, die das Abregeln dann für sich umsetzen.

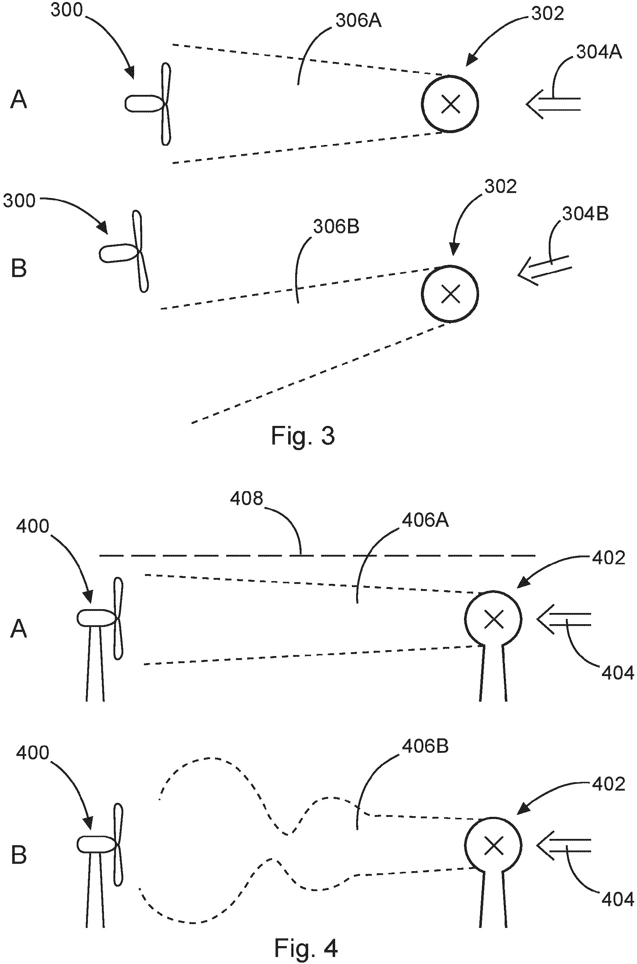

**Figur 3** erläutert anschaulich das durch ein Hindernis für eine Windenergieanlage auftretende Problem. Figur 3 zeigt zwei Draufsichten A und B jeweils auf eine Windenergieanlage 300 und ein Hindernis 302, das hier nur schematisch dargestellt ist und repräsentativ für verschiedene Hindernisse stehen kann. Das Hindernis kann eine Windenergieanlage, ein Baum oder ein Gebäude oder auch eine Anhöhe sein, oder ein Wald, um nur mehrere Beispiele zu nennen.

Die beiden Darstellungen A und B unterscheiden sich in der vorherrschenden Windrichtung 304 A bzw. 304 B.

In Darstellung A führt die Windrichtung 304 A dazu, dass ein durch das Hindernis 302 hervorgerufener Windnachlauf 306 A die Windenergieanlage 300 erreicht. Der Windnachlauf 306 A ist insoweit durch zwei begrenzende gestrichelte Linien schematisch dargestellt.

In der Darstellung A erreicht somit der Windnachlauf 306 A die Windenergieanlage 300 und dadurch können besonders Verwirbelungen an der Windenergieanlage 300 auftreten, die sie schädigen können.

Bei der etwas anderen Windrichtung 304 B der Darstellung B ruft das Hindernis 302 ebenfalls einen Windnachlauf 306 B hervor, der aber nicht die Windenergieanlage 300 erreicht und somit nicht zu schädigenden Verwirbelungen an der Windenergieanlage 300 führt. Die Windenergieanlage 300 braucht daher nicht abgeregelt zu werden.

Die Darstellung in Figur 3 erläutert eine im Grunde bekannte Situation mit bekannter Lösung. Sie führt dazu, dass zu der Situation der Darstellung A, also immer dann, wenn die Windrichtung 304 A vorliegt, die Windenergieanlage 300 abgeregelt wird. Das erfolgt natürlich auch in Abhängigkeit der Windgeschwindigkeit, denn bei geringen Windgeschwindigkeiten ist keine relevante Schädigung der Windenergieanlage 300 zu erwarten.

Es wurde nun aber erkannt, dass die dargestellte Windrichtung 304 A auch bei ausreichend starkem Wind nicht zu einer besonders großen Belastung durch den Windnachlauf 306 A an der Windenergieanlage 300 führen muss. Es wurde erkannt, dass wenigstens eine weitere Wettereigenschaft einen Einfluss haben kann und daher berücksichtigt werden sollte.

Eine solche Wettereigenschaft ist eine thermische Schichtung, die in **Figur 4** veranschaulicht ist. Die thermische Schichtung zwischen Luftschichten ist durch eine horizontale thermische Grenzschicht 408 illustriert. **Figur 4** zeigt somit in den Darstellungen A und B jeweils eine Seitenansicht einer Windenergieanlage 400 und eines Hindernisses 402. Die Windenergieanlage 400 kann der Windenergieanlage 300 der Figur 3 entsprechen, und im Übrigen auch einer Windenergieanlage 100 der Figur 1 oder der Figur 2. Das Hindernis 402 kann dem Hindernis 302 der Figur 3 entsprechen. Es ist ebenfalls Wind mit einer Windrichtung 404 eingezeichnet. Die Windrichtung 404 kann der Windrichtung 304 A gemäß Figur 3 entsprechen. Die Windrichtung 404 ist also so, dass ein Windnachlauf 406 A bzw. 406 B ausgehend von dem Hindernis 402 zunächst in Richtung auf die Windenergieanlage 400 gerichtet ist.

Besonders bei ebener Landschaft und der in Darstellung A eingezeichneten thermischen Grenzschicht 408 kann der Windnachlauf 406 A die Windenergieanlage 400 erreichen. Das ist besonders eine Situation, die bei flachem Gelände zu erwarten ist. Ist das Gebiet also flach, also nicht bergig, und liegt eine starke thermische Schichtung vor, die hier durch die thermische Grenzschicht 408 symbolisiert ist, ist zu erwarten, dass der Windnachlauf 406 A die Windenergieanlage 400 erreicht.

In der Darstellung gemäß Figur B ist keine thermische Grenzschicht eingezeichnet und hier wird somit ein Fall veranschaulicht, bei dem keine oder nur eine geringe thermische Schichtung der Luftmassen der Atmosphäre vorliegt. Dies kann dazu führen, dass der Windnachlauf 406 B die Windenergieanlage 400 nicht oder schwächer erreicht, im Vergleich zur Situation A. Nur zur Veranschaulichung ist dafür der Windnachlauf 406 B so dargestellt, dass er ausgehend von dem Hindernis 402 zur Windenergieanlage 400 hin immer stärker aufgelöst wird, z.B. selbst verwirbelt wird, so dass sich kein klarer bzw. kein langer klarer Windnachlauf ergibt.

Die Darstellung der Figur 4 der Situation B ist insoweit aber nur veranschaulichend zu verstehen und soll nicht die tatsächlich auftretenden Wetterphänomene wiedergeben. Es soll deutlich gemacht werden, dass trotz in Figur 4 angenommener gleicher Windrichtung 404 und gleicher Windstärke in einem Fall der Windnachlauf 406 A die Windenergieanlage 400 erreicht, im anderen Fall der Windnachlauf 406 B die Windenergieanlage 400 aber nicht erreicht. Es kommt natürlich auch in Betracht, dass der Windnachlauf 406 B die Windenergieanlage 400 lediglich schwächer erreicht. Jedenfalls erreicht er die Windenergieanlage 400 so viel schwächer, dass diese weniger oder gar nicht abgeregelt werden muss, im Vergleich zur Situation gemäß Figur 4 Darstellung A.

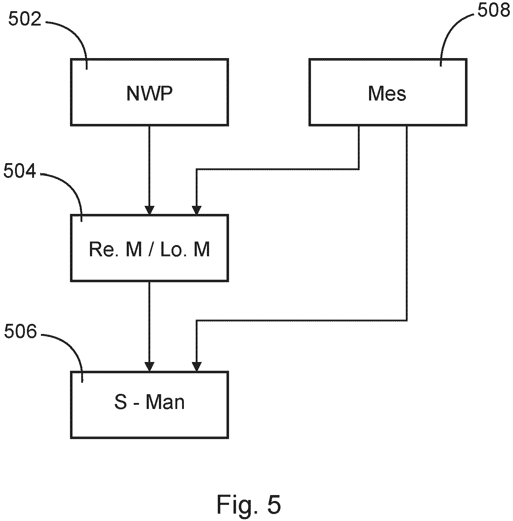

**Figur 5** erläutert einen Ablauf zum Abregeln einer Windenergieanlage. Der Ablauf 500 beginnt im Grunde mit dem Wettervorhersageschritt 502. Demnach wird eine nummerische Wettervorhersage bereitgestellt. Durch diese können die physikalischen Größen, die die Entstehung schädigender Strömungszustände beeinflussen, in Raum und Zeit erhalten werden. Wettervorhersagen können in Form von heutigen nummerischen Wettervorhersagen bereitgestellt werden, was als "numerical weather prediction" / NWP bezeichnet wird.

Zur Verbesserung können solche Wettervorhersagen mit einem regionalen Wettermodell gekoppelt werden, was in dem Präzisierungsschritt 504 durchgeführt wird. In dem Präzisierungsschritt kann somit ein regionales Wettermodell vorhanden sein, um auch eine höhere Auflösung zu erreichen. Möglicherweise können zukünftige Wettermodelle eine höhere Auflösung bereitstellen, so dass das regionale Wettermodell, oder ein lokales Wettermodell, entbehrlich sein könnten.

Somit wird besonders vorgeschlagen, in dem Präzisierungsschritt 504 das Wettermodell, das eine geringe räumliche Auflösung hat, aufzuwerten. Besonders wird vorgeschlagen, ein zusätzliches Verfahren anzuwenden, um eine Prognose der Strömung an der Anlagenposition zu erhalten. Solche Verfahren stellen einen Zusammenhang zwischen den Ergebnissen der Wettermodelle und den zu erwartenden für die Anlagen schädigenden Strömungszuständen her. Der Zusammenhang zwischen den Ergebnissen der Wettermodelle und dem Strömungszustand an den Anlagen kann durch vorgefertigte Simulationen ermittelt werden.

Solche Simulationen können als RANS oder LES bezeichnet werden. Statische Modelle können auch verwendet werden.

Insoweit kann in dem Präzisierungsschritt neben einem regionalen Wettermodell auch ein lokales Wettermodell verwendet werden, das für die genannten Verfahren steht, die zu genaueren Strömungsverhältnissen an der Anlage führen.

Schließlich werden die Ergebnisse an den Abregelungsschritt 506 weitergegeben, der die konkrete Abregelung aus den Daten ableitet. Somit steht der Abregelungsschritt für das Anwenden eines wetterbedingten Sektormanagements an der Anlage. Die Vorhersagegüte der Modelle, die in dem Wettervorhersageschritt 502 bzw. dem Präzisionsschritt 504 beschrieben werden, können durch Messungen wie z.B. von in Anlagennähe befindlichen Messmasten oder auf der Anlage montierten LIDAR Systemen zusätzlich verbessert werden.

Die aufgenommenen Daten können über ein SCADA System der Anlage in die Regelstrategie eingegliedert werden. Somit kann hier auch von SCADA-Daten die Rede sein. Dadurch kann eine Optimierung der Vorhersagegüte durch Training des Basismodells mit historischen Daten durchgeführt werden. Außerdem kommt eine Live-Optimierung, also eine Online-Optimierung im laufenden Betrieb der Vorhersagegüte durch Verschneiden der aktuellen Vorhersage mit Live-Daten in Betracht. In diesen beiden Fällen, also der Optimierung der Vorhersagegüte und der Live-Optimierung, kommen für die Optimierung Methoden des maschinellen Erlernens zum Einsatz.

Die genannten Sensordaten können somit durch den Sensorschritt 508 einfließen, der hier nur exemplarisch für das Aufnehmen von Messdaten steht. In dem Messschritt können auch andere Messdaten wie Windrichtung und Windgeschwindigkeit aufgenommen werden und jeweils einfließen.

Erfindungsgemäß wurde besonders das Folgende erkannt bzw. wird das Folgende vorgeschlagen.

Die Erfindung kann für den laufenden Betrieb und für eine Parkplanung Anwendung finden. Für eine Anwendung im laufenden Betrieb von bestehenden Anlagen/Parks beinhaltet der vorgeschlagene Algorithmus besonders drei Schritte:
Schritt A1: Bereitstellung der numerischen Wettervorhersage: Durch diese können die physikalischen Größen, die die Entstehung schädlicher bzw. schädigender Strömungszustände beeinflussen, in Raum und Zeit erhalten werden. Wettervorhersagen können in Form von:
   a) Heutigen numerischen Wettervorhersagen (im englischen: numerical weather prediction NWP), und/oder
   b) Heutigen NWP Modellen, gekoppelt mit einem regionalen Wettermodell (im englischen mesoscale coupling) verwendet werden.
   Zukünftige Wettermodelle, die erwartungsgemäß skalenauflösend sein werden, also eine hohe Auflösung haben, können dann ebenfalls eingesetzt werden.
Schritt A2: Da die in Schritt A1 unter a) und b) beschriebenen Wettermodelle eine geringe räumliche Auflösung besitzen, wird vorgeschlagen, zusätzliche Verfahren anzuwenden um eine Prognose der Strömung an der Anlagenposition zu erhalten. Diese Verfahren stellen einen Zusammenhang zwischen den Ergebnissen der Wettermodelle und den zu erwartenden für die Anlagen schädlichen bzw. sie schädigenden Strömungszuständen dar. Der Zusammenhang zwischen den Ergebnissen der Wettermodelle und dem Strömungszustand an den Anlagen kann durch vorgefertigte RANS oder LES Simulationen hergestellt werden. Statistische Modelle können auch verwendet werden.
Schritt A3: Anwendung des wetterbedingten Sektormanagements an der Anlage. Die Vorhersagegüte der Modelle die in Schritt A1 und Schritt A2 beschrieben werden, können durch Messungen wie z.B. i) von in Anlagenähe befindlichen Messmasten oder ii) auf der Anlage montierten LIDAR Systemen zusätzlich verbessert werden oder iii) die SCADA-Daten der Anlage selbst und in die Regelstrategie eingegliedert werden, durch die folgenden Maßnahmen:
   a) Optimierung der Vorhersagegüte durch Training des Basismodells mit historischen Daten
   b) Live-Optimierung der Vorhersagegüte durch Verschneiden der aktuellen Vorhersage mit Live-Daten

In beiden Fällen A3 a) und A3 b) können für die Optimierung Methoden des maschinellen Lernens zum Einsatz kommen.

Für die Anwendung in der Parkplanung kommen statt aktuellen Wettervorhersagen historische Wettervorhersagen für den fraglichen Standort zum Einsatz. Schritt A1 und Schritt A2 bleiben dabei im Wesentlichen unverändert.

In einem von Schritt A3 abweichenden Schritt B3 kann der Effekt des Sektormanagements dann simuliert werden, um die Erhöhung des AEP oder der Lebensdauer zu quantifizieren.

Die Regelalgorithmen können in die Anlagen- oder in der Parksteuerung integriert werden.

Nach Integration in eine Steuerung, kann das Verfahren dazu verwendet werden, um im laufenden Betrieb mehr Leistung oder eine Verlängerung der Lebensdauer der Anlagen zu erzielen.

Die Anpassungen des Reglers können auch bereits in der Parkplanungsphase berücksichtigt werden. Eine Quantifizierung des dadurch erhöhten AEP oder der dadurch erhöhten Lebensdauer kann genutzt werden, die Stromgestehungskosten zu verringern.

Durch eine Anpassung der Steuerung an die an den jeweiligen Standort herrschenden Bedingungen, kann eine maximale Stromproduktion oder Lebensdauer erzielt werden. Die Erfindung sieht eine Abregelung in Abhängigkeit von der Windrichtung vor, und ist insoweit eine sektorielle Abregelung und das Abregeln kann daher als Sektormanagement bezeichnet werden. Es wird aber, neben der Windgeschwindigkeit, eine weitere Wettereigenschaft berücksichtigt, sodass eine zusätzliche Bedingung vorliegt, und das Verfahren daher als bedingtes Sektormanagement bezeichnet werden kann. Dieses bedingte Sektormanagement führt durch die Berücksichtigung dieser zusätzlichen Bedingung zu geringeren Kosten.

Durch die Vorhersage von für die Anlage schädlichen bzw. sie schädigenden Strömungszuständen, kann man die Anlagen an Zeitpunkten, zu denen diese schädlichen bzw. die Anlage schädigenden Zustände mit hoher Wahrscheinlichkeit auftreten, abregeln. Hingegen kann man die Anlagen in einem Modus von vermehrter Leistungsproduktion fahren, wenn diese schädlichen bzw. die Anlage schädigenden Zustände mit einer niedrigen Wahrscheinlichkeit auftreten. Eine solche Regelstrategie bzw. Regelungsstrategie ist vor dem Hintergrund der Tatsache sinnvoll, dass Belastungen mit hoher Amplitude exponentiell in den Verbrauch der Lebenszeit eingehen. Durch eine solche Regelstrategie kann man die Leistung oder die Lebensdauer maximieren und somit die Stromproduktionskosten reduzieren.

## Patentansprüche

1. Verfahren zum Betreiben einer Windenergieanlage (100, 300, 400) zum Erzeugen einer einstellbaren Anlagenleistung, und die Windenergieanlage (100, 300, 400)
- weist einen Rotor (106) mit in ihrem Blattwinkel verstellbaren Rotorblättern (108) auf,
- ist mit einer einstellbaren Rotordrehzahl betreibbar, und
- ist an einem Aufstellungsort in einem Abstand zu einem Hindernis aufgestellt,
wobei
- das Hindernis eine Windstörung verursachen kann, die in Abhängigkeit von aktueller Windrichtung (404) und Windgeschwindigkeit die Windenergieanlage (100, 300, 400) als Windnachlauf (406A) erreichen kann,
- die Windenergieanlage (100, 300, 400) zum Schutz gegen Belastungen durch den Windnachlauf (406A) ihren Anlagenbetrieb durch Abregeln reduziert,
- das Abregeln in Abhängigkeit von der aktuellen Windrichtung (404) und der aktuellen Windgeschwindigkeit gesteuert wird,
- eine Wettervorhersage verwendet wird, um zusätzlich zur Windrichtung (404) und Windgeschwindigkeit wenigstens eine weitere Wettereigenschaft zu berücksichtigen, und
- das Abregeln zusätzlich in Abhängigkeit von der Wettervorhersage, insbesondere von der weiteren Wettereigenschaft, gesteuert wird.

2. Verfahren nach Anspruch 1, **dadurch gekennzeichnet, dass**
- die weitere Wettereigenschaft in Abhängigkeit der Wettervorhersage geschätzt wird, und/oder
- die weitere Wettereigenschaft eine thermische Schichtung atmosphärischer Grenzschichten (408) ist, und
- das Abregeln in Abhängigkeit von der thermischen Schichtung gesteuert wird.

3. Verfahren nach einem der Ansprüche 1 oder 2, **dadurch gekennzeichnet, dass**
- das Abregeln in Abhängigkeit von einer bzw. der thermischen Schichtung so gesteuert wird, dass
- ein die Windenergieanlage (100, 300, 400) umgebender Bereich als flaches Land oder bergiges Land klassifiziert wird, und
- bei einer Klassifizierung in flaches Land umso mehr abgeregelt wird, je schwächer eine Durchmischung zwischen Grenzschichten (408) ist und/oder je stabiler die thermische Schichtung ist, und
- bei einer Klassifizierung in bergiges Land umso weniger abgeregelt wird, je schwächer eine Durchmischung zwischen Grenzschichten (408) ist und/oder je stabiler die thermische Schichtung ist.

4. Verfahren nach einem der vorstehenden Ansprüche, **dadurch gekennzeichnet, dass** zum Abregeln
- die Anlagenleistung reduziert wird,
- die Rotordrehzahl reduziert wird, und/oder
- der Blattwinkel jedes Rotorblattes (108) in Richtung hin zu einer Fahnenstellung verstellt wird.

5. Verfahren nach einem der vorstehenden Ansprüche, **dadurch gekennzeichnet, dass**
- in Abhängigkeit von der Wettervorhersage, insbesondere in Abhängigkeit von der Wettereigenschaft eine Länge des Windnachlaufs (406A) geschätzt wird und
- in Abhängigkeit von der geschätzten Länge des Windnachlaufs (406A) das Abregeln gesteuert wird.

6. Verfahren nach einem der vorstehenden Ansprüche, **dadurch gekennzeichnet, dass**
- die Wettervorhersage unter Verwendung eines regionalen Wettermodells (142) an den Aufstellungsort angepasst wird, wobei
- das regionale Wettermodell (142) einen Zusammenhang zwischen der Wettervorhersage, die für einen über den Aufstellungsort hinausgehenden Bereich aufgestellt ist, und einer lokalen Wettereigenschaft am Aufstellungsort beschreibt und/oder, dass
- Strömungszustände an der Windenergieanlage (100, 300, 400), die durch den Windnachlauf (406A) beeinflusst werden, in Abhängigkeit von der Wettervorhersage, insbesondere in Abhängigkeit von der Wettereigenschaft geschätzt werden, und
- in Abhängigkeit von den geschätzten Strömungszuständen das Abregeln gesteuert wird.

7. Verfahren nach einem der vorstehenden Ansprüche, **dadurch gekennzeichnet, dass**
- Strömungszustände bzw. die Strömungszustände, die in Abhängigkeit von der Wettervorhersage geschätzt werden,
- zusätzlich in Abhängigkeit von wenigstens einem lokalen Wettermodell (142) geschätzt werden, ggf. unter weiterer Berücksichtigung eines bzw. des regionalen Wettermodells (142), wobei
- ein lokales Wettermodell (142) einen Zusammenhang zwischen der Wettervorhersage und an der Windenergieanlage (100, 300, 400) erwarteten Strömungszuständen beschreibt.

8. Verfahren nach einem der vorstehenden Ansprüche, **dadurch gekennzeichnet, dass**
- ein bzw. das lokale Wettermodell (142)
- im laufenden Betrieb der Windenergieanlage (100, 300, 400) angelernt und/oder adaptiert wird, insbesondere durch laufenden Vergleich der Wettervorhersage mit an der Windenergieanlage (100, 300, 400) erfassten Strömungszuständen, und/oder
- in Abhängigkeit von historischen Daten angelernt und/oder adaptiert wird, und/oder
- durch Simulationen bestimmt wird und/oder
- eine bzw. die Schätzung von Strömungszuständen an der Windenergieanlage (100, 300, 400), die durch den Windnachlauf (406A) beeinflusst werden, durch aktuelle Messungen an oder in der Nähe der Windenergieanlage (100, 300, 400) verbessert wird und/oder
- wenn die Windenergieanlage (100, 300, 400) in einem Windpark aufgestellt ist, Nachläufe innerhalb des Windparks berücksichtigt werden.

9. Verfahren nach einem der vorstehenden Ansprüche, **dadurch gekennzeichnet, dass**
- das Abregeln der Höhe nach kontinuierlich oder in mehreren Schritten in Abhängigkeit von der Wettervorhersage gesteuert wird und/oder, dass
- eine weitere Windenergieanlage (100, 300, 400) das Hindernis bildet, und/oder
- die Windenergieanlage (100, 300, 400) eine von mehreren Windenergieanlagen (100, 300, 400) eines Windparks ist, und
- eine der übrigen Windenergieanlagen (100, 300, 400), je nach Windrichtung (404), das Hindernis bildet.

10. Verfahren zum Planen eines mehrere Windenergieanlagen (100, 300, 400) aufweisenden Windparks, wobei
- zur Schätzung einer zu erwartenden Energieproduktion des Windparks ein Betrieb der Windenergieanlagen (100, 300, 400) für einen Schätzzeitraum, insbesondere ein Jahr, simuliert wird, wobei zur Simulation jeweils ein
- Verfahren zum Betreiben einer Windenergieanlage (100, 300, 400) zum Erzeugen einer einstellbaren Anlagenleistung simuliert wird, wobei bei dem simulierten Verfahren die Windenergieanlage (100, 300, 400)
- einen Rotor (106) mit in ihrem Blattwinkel verstellbaren Rotorblättern (108) aufweist,
- mit einer einstellbaren Rotordrehzahl betreibbar ist, und
- an einem Aufstellungsort in einem Abstand zu einem Hindernis aufgestellt ist,
wobei die Simulation beinhaltet, dass
- das Hindernis eine Windstörung verursachen kann, die in Abhängigkeit von aktueller Windrichtung (404) und Windgeschwindigkeit die Windenergieanlage (100, 300, 400) als Windnachlauf (406A) erreichen kann,
- die Windenergieanlage (100, 300, 400) zum Schutz gegen Belastungen durch den Windnachlauf (406A) ihren Anlagenbetrieb durch Abregeln reduziert,
- das Abregeln in Abhängigkeit von der aktuellen Windrichtung (404) und der Windgeschwindigkeit gesteuert wird,
- eine Wettervorhersage verwendet wird, um zusätzlich zur Windrichtung (404) und Windgeschwindigkeit wenigstens eine weitere Wettereigenschaft zu berücksichtigen, und
- das Abregeln zusätzlich in Abhängigkeit von der Wettervorhersage, insbesondere von der weiteren Wettereigenschaft, gesteuert wird, wobei als Wettervorhersage historische Wetterdaten des Aufstellungsortes verwendet werden.

11. Verfahren nach Anspruch 10, **dadurch gekennzeichnet, dass**
- zur Simulation jeweils eines Betriebs einer Windenergieanlage (100, 300, 400) ein Verfahren zum Betreiben einer Windenergieanlage (100, 300, 400) gemäß einem der Ansprüche 1 bis 9 simuliert wird, und insbesondere
- für eine bzw. die Wettervorhersage historische Wetterdaten verwendet werden,
- ein bzw. das lokale Wettermodell (142)
- in Abhängigkeit von historischen Daten angelernt oder adaptiert wird, und/oder
- durch Simulationen bestimmt wird und/oder
- bei einer bzw. der Schätzung von Strömungszuständen an der Windenergieanlage (100, 300, 400), die durch den Windnachlauf (406A) beeinflusst werden, anstelle von für Verbesserungen verwendeter aktueller Messungen an oder in der Nähe der Windenergieanlage (100, 300, 400), historische Messwerte verwendet werden.

12. Windenergieanlage (100, 300, 400) zum Erzeugen einer einstellbaren Anlagenleistung, und die Windenergieanlage (100, 300, 400)
- weist einen Rotor (106) mit in ihrem Blattwinkel verstellbaren Rotorblättern (108) auf,
- ist mit einer einstellbaren Rotordrehzahl betreibbar, und
- ist an einem Aufstellungsort in einem Abstand zu einem Hindernis (302, 402) aufgestellt
wobei
- das Hindernis (302, 402) eine Windstörung verursachen kann, die in Abhängigkeit von aktueller Windrichtung (404) und Windgeschwindigkeit die Windenergieanlage (100, 300, 400) als Windnachlauf (406A) erreichen kann,
wobei die Windenergieanlage (100, 300, 400) dazu vorbereitet ist, mit einem Verfahren betrieben zu werden, das
- die Windenergieanlage (100, 300, 400) zum Schutz gegen Belastungen durch den Windnachlauf (406A) ihren Anlagenbetrieb durch Abregeln reduziert, wobei
- das Abregeln in Abhängigkeit von der aktuellen Windrichtung (404) und der aktuellen Windgeschwindigkeit gesteuert wird,
- eine Wettervorhersage verwendet wird, um zusätzlich zur Windrichtung (404) und Windgeschwindigkeit wenigstens eine weitere Wettereigenschaft zu berücksichtigen, und
- das Abregeln zusätzlich in Abhängigkeit von der Wettervorhersage, insbesondere von der weiteren Wettereigenschaft, gesteuert wird, wobei
- das Steuern des Abregelns auf einer Abregelungssteuereinheit implementiert ist und die Windenergieanlage (100, 300, 400) diese Abregelungssteuereinheit aufweist, oder mit ihr gekoppelt ist bzw. eine Schnittstelle zum Koppeln mit der Abregelungssteuereinheit aufweist.

13. Abregelungssteuereinheit, vorbereitet zum Steuern des Abregelns einer Windenergieanlage (100, 300, 400) gemäß einem Verfahren nach einem der Ansprüche 1 bis 9, und/oder vorbereitet zur Verwendung in einer Windenergieanlage (100, 300, 400) gemäß Anspruch 12.

14. Windpark mit mehreren Windenergieanlagen (100, 300, 400), wobei
- wenigstens eine der Windenergieanlagen (100, 300, 400) gemäß Anspruch 12 ausgebildet ist, und/oder
- der Windpark eine Parksteuerung aufweist, die eine Abregelungssteuereinheit nach Anspruch 13 umfasst.

15. Windpark nach Anspruch 14, **dadurch gekennzeichnet, dass**
- der Windpark Kommunikationsmittel aufweist zur Kommunikation unter den Windenergieanlagen (100, 300, 400), um das Abregeln einer ersten Windenergieanlage (100, 300, 400) in Abhängigkeit von einer zweiten Windenergieanlage (100, 300, 400) zu steuern,
- insbesondere wenn die zweite Windenergieanlage (100, 300, 400) das Hindernis (302, 402) für die erste Windenergieanlage bildet.
